# EUROPEAN PATENT SPECIFICATION

(11) **EP 0 437 896 B1**
(45) Date of publication and mention of the grant of the patent: **15.05.1996**
(21) Application number: 90203533.6
(22) Date of filing: 29.12.1990
(51) Int. Cl.: F16C 43/06, F16C 33/60, F16C 19/24

(54) **Process for manufacturing a compact roller bearing**
Herstellungsverfahren eines kompakten Wälzlagers
Procédé de fabrication d'un palier compact à contact de roulement

(30) Priority: 19.01.1990 IT 1910990
(43) Date of publication of application: 24.07.1991
(73) Proprietor: NUOVOPIGNONE INDUSTRIE MECCANICHE E FONDERIA S.p.A., I-50127 Florence (IT)
(72) Inventor: Vinciguerra, Costantino, I-50129 Florence (IT)
(74) Representative: Fusina, Gerolamo

(56) References cited:
- DE-A- 3 426 185
- US-A- 4 997 297

## Description

This invention relates to a new method which in a very simple, economical and efficient manner enables a preferably fully filled roller bearing of high load-carrying capacity to be formed which although of very small axial dimension, of the order of 6 mm, and thus particularly suitable for modern rotary dobbies operating at high speed, is extremely strong and can be constructed with components which have undergone hardening heat-treatment and are thus plastically indeformable, and in addition can be easily removed and/or replaced.

The invention also relates to the fully or partly filled roller bearing formed in accordance with said method or partial method.

From the current state of the art, and more specifically from our previous DE-A-3 923 003 (equivalent to GB-A-2 221 261 : UK Patent Application N. 8915633.5 filed on 07/07/1989), a method is already known for forming a fully filled roller bearing of high load-carrying capacity and very small axial size, as required particularly in modern rotary dobbies for forming the pivotal connection between the cams of the driving crank arms and the main shaft and between said cams and the relative arms.

According to this known method, the rollers are held in position, between the cylindrical guide and rolling tracks of the outer race and of the inner race of the bearing respectively, by two opposing lateral shoulder-forming elastic rings which are snap-inserted into corresponding inwardly flared annular grooves formed in the opposing ends of the inner edge of said outer race of the bearing, and are locked in position by two opposing inclined annular appendices of substantially frusto-conical shape provided on said ends of said outer race, and which by means of two suitable opposing dies are axially pressed over an annular tooth projecting outwards from said elastic shoulder-forming rings. US-A-1738984 discloses an antifriction bearing in which a continuous retaining ring is held in position by ratcheting shoulders between two respective frusto-conical walls. In its turn said ring holds the rollers in position. The retaining ring is mounted on the outer ring by shrinking or pressing.

This known method has however a series of drawbacks, the most serious of which is the need to plastically press the elements (the annular appendices), which besides being a possible cause of deformation of the guide and rolling tracks with a consequently deleterious effect on the proper sliding of the rollers, does not enable the bearing to be constructed of materials which have undergone hardening heat-treatment, and which would be unable to undergo said plastic deformation.

A further drawback derives from the fact that said shoulder-forming rings are never totally rigid with the bearing race and therefore have a limited strength, which limits the axial load-carrying capacity of the bearing.

Further drawbacks arise from the material impossibility of removing the bearing because of the plastic deformation produced by said pressing, the need to provide suitable pressing dies and the need to always use two shoulder-forming rings, one on each side of the outer bearing race, to allow the most uniform pressing possible, and which can be done only with two equal and opposite dies.

The object of the present invention is to provide a method for forming a preferably fully filled roller bearing of very small axial dimension and high loading capacity which does not require any plastic pressing and which therefore no longer requires pressing dies, is more economical, is very strong and very resistant to axial loads, can be removed easily if required, and requires the use of only one shoulder-forming lateral ring.

This is attained substantially in that the rollers are held in position, between the cylindrical guide and rolling tracks of the inner race and of the outer race of the bearing respectively, by at least one small-thickness lateral shoulder-forming ring which, after being expanded for example by heating, is inserted into an annular housing groove of slightly larger diameter than the ring itself, said groove being formed by mechanical machining in one edge of the cylindrical guide and rolling track of the bearing inner race.

In this manner, on cooling with consequent shrinkage, the shoulder-forming ring tightens against the wall of the annular housing groove with a high locking force which in practice rigidly connects it to the bearing inner race, so making it extremely strong and also resistant to high axial loads.

Again, the absence of pressing operations and hence of dies not only allows the use of a single shoulder-forming ring and of materials hardened by heat-treatment, but also allows easy removal of the bearing as neither the inner race nor the outer race has undergone alteration of any kind.

To ensure more effective tightening of the lateral shoulder-forming ring against the wall of the annular housing groove without any possibility of withdrawal, said wall of the annular groove of the bearing inner race is made of inwardly flared frusto-conical shape with an inclination preferably greater than the angle of friction, so that not only can the lateral shoulder-forming ring not withdraw from the groove after cooling, but even during the cooling itself the ring is obliged to automatically position itself by sliding along the inclined wall of said annular housing groove until it presses against the inner flat base of said groove.

It is also apparent that in addition to having a small thickness and an inner diameter slightly less than that of the mouth of said annular housing groove, said shoulder-forming ring must also have its inner edge of frusto-conical shape corresponding to the frusto-conical wall of said annular groove. On its outer face a bevel is machined extending from the outer periphery of the ring to about half way along its width.

The purpose of this ring bevel is to give the ring the tendency to roll inwards, ie towards the rollers, so as to ensure that no part of the ring can ever project beyond the small thickness of the bearing, this tendency being opposed by the resting of the ring against said inner flat base of the groove and by the cooperation between the inwardly flared frusto-conical walls of the ring and groove.

The method for forming a preferably fully filled roller bearing of very small axial dimension and high loading capacity comprising an inner race and an outer race provided with facing cylindrical guide and rolling tracks for said rollers is defined in claim 1.

The present invention, further provides a preferably fully filled roller bearing of very small axial dimension and high loading capacity formed in accordance with the method of the present invention as defined in claim 2.

A further characteristic of the present invention is that said flaring of the frusto-conical wall of said annular housing groove and of the inner frusto-conical edge of said lateral shoulder-forming ring has an inclination exceeding the angle of friction.

Finally, a further characteristic of the present invention is that on the outer face of said lateral shoulder-forming ring for said rollers there is provided a bevel which extends from the outer periphery to about half-way along the width of the ring.

The invention is described hereinafter with reference to the accompanying drawings which illustrate preferred embodiments thereof by way of non-limiting example in that technical and constructional modifications can be made thereto without leaving the scope of the present invention.

It is however apparent that even though the accompanying drawings relate to the specific application of roller bearings in rotary dobbies, the invention is not limited to said field and can be extended to all fields in which a high load-carrying capacity bearing of very small axial dimension is required, as can be required in particular in reciprocating compressors and motors.

In said drawings:

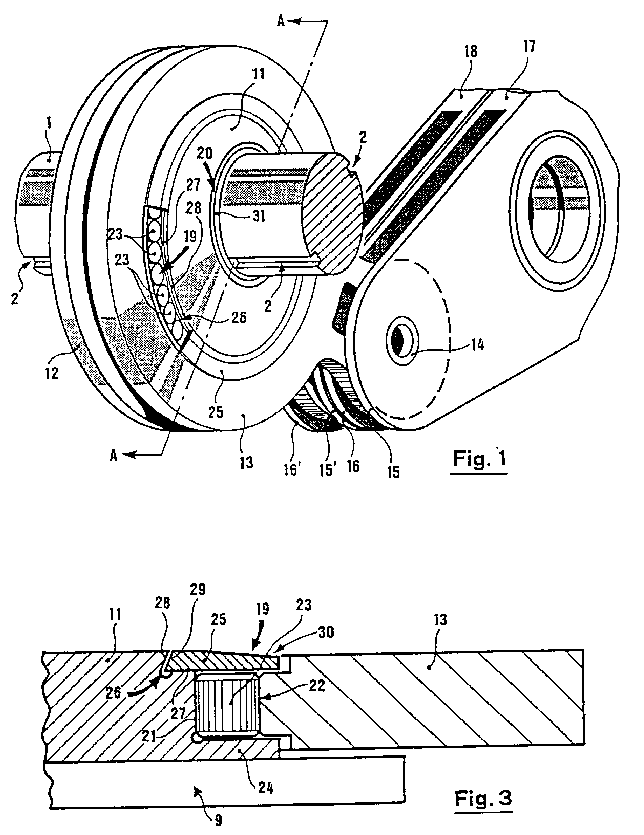

Figure 1 is a partial perspective view of two cam-operated crank arms and two main levers of a rotary dobby using roller bearings formed in accordance with the present invention;
Figure 2 is a cross-section on the line AA of Figure 1 to an enlarged scale;
Figure 3 is a partial cross-section to a very enlarged scale showing one embodiment of a roller bearing according to the invention situated between the cam and the crank arm;
Figure 4 is a partial cross-section to a very enlarged scale showing a further embodiment of a roller bearing according to the invention applied between the rotary shaft and the cam;
Figure 5 is a partial cross-section through the roller bearing of the invention showing the lateral shoulder-forming ring formed in accordance with the invention, inserted into the respective annular housing groove;
Figure 6 is a cross-section through a modified embodiment of a roller bearing of the invention which allows sealed lubrication of the bearing.

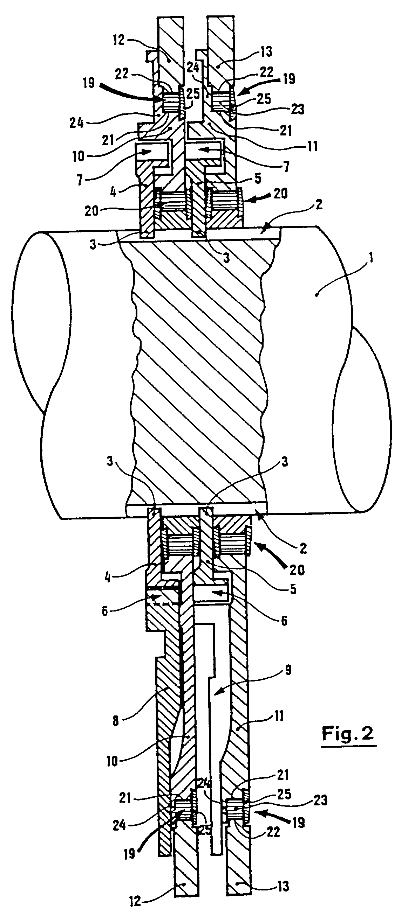

In the figures the reference numeral 1 indicates the main rotating shaft of a rotary dobby, comprising slots 2 into which there are inserted corresponding teeth 3 of two discs 4 and 5, each of which comprises two recesses 6 and 7 into which a key 8 can be inserted (only one is shown in Figure 2, the other being removed to show the relative slide guide 9) in order to make said discs 4 and 5 and consequently said rotating shaft 1 rigid with the cams 10 or 11 of the dobby driving crank arms 12 or 13 respectively, the small ends of which are pivoted via a pin 14 between the two cheeks 15, 16 and 15', 16' of the dobby main levers 17 or 18.

Said cams 10 and 11 are provided on their inner and outer periphery with two roller bearings 19 and 20 formed in accordance with the invention.

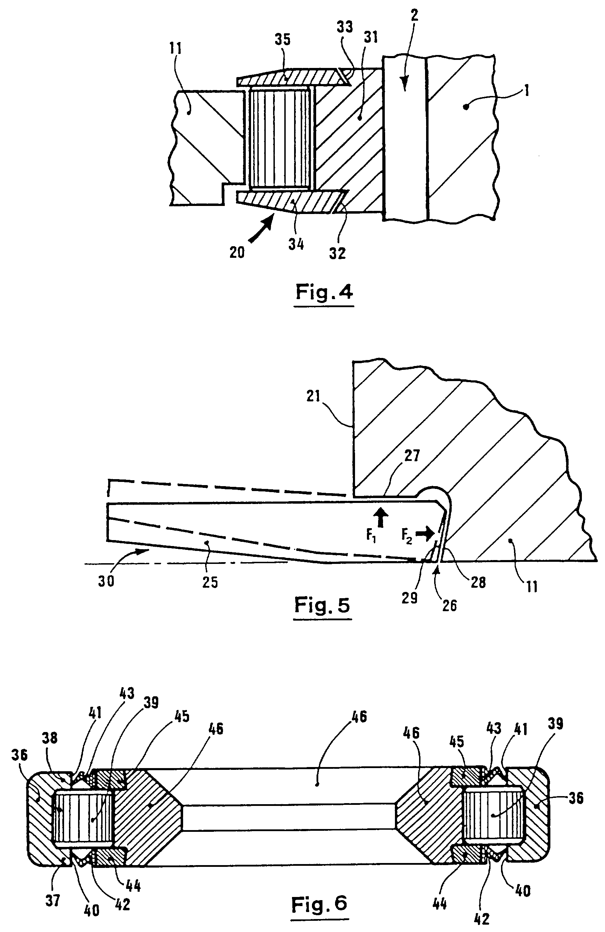

The large-diameter roller bearing 19 has as its inner race the cam 11 (see specifically Figure 3) and as its outer race the big end of the driving crank arm 13. Said bearing inner and outer races 11 and 13 are provided with facing cylindrical tracks 21 and 22 for the guiding and rolling of the rollers 23. Said rollers 23 are held axially in position respectively by a shoulder projection 24 provided on the inner race 11 and, on the other side, by a small-thickness lateral shoulder-forming ring 25 which is inserted into an annular housing groove 26 provided in the edge of the cylindrical track 21 of the bearing inner race 11.

Said annular groove 26 has a flat base 27 perpendicular to the track 21 and a frusto-conical circumferential wall 28 flared towards the interior of the race 11 and with its inclination preferably exceeding the angle of friction. Said shoulder-forming ring 25 itself has an inner edge 29 (see specifically Figure 5) of frusto-conical shape corresponding to the shape 28 of said annular groove 26 but with its inner diameter slightly less than the corresponding diameter of the circumferential wall 28 of said groove 26 so that to be inserted into the groove it has firstly to be expanded by heating with the result that on cooling it becomes forced against said frusto-conical wall to thus become rigidly fixed to the bearing inner race 11. Said ring 25 comprises a bevel 30 (see specifically Figure 5) extending from the outer periphery of the ring to about half-way along its width, said bevel creating a dissymmetry which tends to cause the ring 25 to roll towards the rollers 23 into the position shown by dashed lines in Figure 5, this tendency being opposed by the fact of the ring resting against the flat base 27 of the groove. In this manner two forces F1 and F2 are created (see Figure 5) which rigidly lock the shoulder-forming ring 25 both in the radial direction against the frusto-conical wall 28 and in the axial direction against the flat base 27.

In contrast, the small-diameter roller bearing 20 (see specifically Figure 4) has the cam 11 as its outer race whereas its inner race consists of a ring 31 keyed onto the rotating shaft 1 and comprising two opposing annular grooves 32 and 33 of frusto-conical wall and flat base and substantially identical to the grooves 26, they house by a shrinkage fit two opposing lateral shoulder-forming rings 34 and 35 substantially identical to the described rings 25.

Finally, Figure 6 shows a modified roller bearing according to the invention which is particularly suitable for use in the joints of the operating levers for the loom heddle frames where the presence of a large quantity of dust makes it convenient to use pre-lubricated roller bearings with a hermetic rotating seal for the lubricating grease in the outward direction.

Said roller bearing consists substantially of an outer race 36 comprising two lateral shoulder appendices 37 and 38 for the rollers 39, terminating in two cylindrical seal surfaces 40 and 41 in sliding contact with two annular elastic retaining seals 42 and 43 made rigid with two opposing lateral shoulder-forming rings 44 and 45 similar to the described rings 25. The annular rings 44 and 45 are housed in corresponding annular grooves similar to the described grooves 26, in the bearing inner race 46.

## Claims

1. A method for forming a preferably fully filled roller bearing of very small axial dimension and high loading capacity comprising an inner race (11) and an outer race (13) provided with facing cylindrical guide and rolling tracks (21,22) for said rollers (23), comprising the following stages:
- forming in at least one of the edges of said cylindrical guide and rolling track (21) of said bearing inner race (11) an annular housing groove (26) with a frusto-conical wall (28) flared towards the interior of the inner race (11), and with a flat base (27) perpendicular to said track (21);
- forming at least one small-thickness lateral shoulder-forming ring (25) with its inner edge (29) of frusto-conical shape corresponding to that of said frusto-conical wall (28) of the annular groove (26) and with its minimum inner diameter slightly less than that of the mouth of said annular housing groove (26) and with a bevel (30) at its outer face extending from the outer periphery to a point along the width of the ring (25) and creating a dissymmetry which tends to cause the ring (25) to roll towards the rollers (23), thereby rigidly locking the ring (25) both in the radial and axial direction in the groove (26);
- inserting the rollers (23) between said facing cylindrical tracks (21,22) of said bearing inner and outer races (11,13) using suitable means;
- expanding said lateral shoulder-forming ring (25) by heating and inserting it into the annular housing groove (26);
- allowing said lateral shoulder-forming ring (25) to cool and thus shrink.

2. A fully or partly filled roller bearing of very small axial dimension and high loading capacity formed in accordance with the method of claim 1, comprising an inner race (11) and an outer race (13) provided with facing cylindrical guide and rolling tracks (21,22) for rollers (23), and in at least one of the edges of said cylindrical guide and rolling track (21) for said rollers (23) in said bearing inner race (11) there is provided an annular housing groove (26) with a flat base (27) perpendicular to said track (21), to cooperate with the lateral shoulder-forming ring (25) for said rollers (23) which has a small thickness and an inner diameter slightly less than that of the mouth of said annular housing groove (26) into which said ring (25) is inserted after being expanded by heating, whereby said annular housing groove (26) has a frusto-conical wall (28) flared towards the interior of said inner race (11) and said lateral shoulder-forming ring (25) has its inner edge (29) of frusto-conical shape corresponding to that of said frusto-conical wall (28) of said annular groove (26), against which it is tightened by shrinkage consequent on cooling, and on the outer face of said lateral shoulder-forming ring (25) there is provided a bevel (30) extending from the outer periphery to a point along the width of said ring (25) and creating a dissymmetry which tends to cause the ring (25) to roll towards the rollers (22), thereby rigidly locking the ring (25) both in the radial and axial direction in the groove (26).

3. A roller bearing as claimed in claim 2, characterised in that said flaring of the frusto-conical wall (28) of said annular housing groove (26) and of the inner frusto-conical edge (29) of said lateral shoulder-forming ring (25) has an inclination exceeding the angle of friction.

4. A roller bearing as claimed in claims 2 or 3, characterised in that said bevel (30) extends from the outer periphery to about half-way along the width of the ring (25).

## Patentansprüche

1. Verfahren zum Herstellen eines vorzugsweise vollgefüllten Rollenlagers sehr kleiner, axialer Abmessung und hoher Belastungskapazität, das einen Innenlaufring (11) und einen Außenlaufring (13) umfaßt, die mit aufeinander zuweisenden, zylindrischen Führungen und Rollenlaufbahnen (21, 22) für die Rollen (23) versehen sind, wobei das Verfahren die folgenden Verfahrensschritte aufweist:
- Herstellen an wenigstens einer der Seiten bzw. Kanten der zylindrischen Führung und der Rollenlaufbahn (21) des Innenlaufringes (11) des Lagers einer ringförmigen Gehäusenut (26) mit einer kegelstumpfförmigen Wand (28), die auf das Innere des Innenlaufringes (11) zugeneigt ist und die eine ebene Basis (27) hat, die zur Laufbahn (21) senkrecht steht;
- Herstellen wenigstens eines seitlichen, schulterbildenden Ringes (25) geringer Dicke, dessen Innenkante (29) eine Kegelstumpfform hat, die der der kegelstumpfförmigen Wand (28) der Ringnut (26) entspricht und dessen kleinster Innendurchmesser geringfügig kleiner ist als der der Öffnung der ringförmigen Gehäusenut (26), und der an seiner Außenseite eine Abschrägung (30) aufweist, die sich vom Außendurchmesser bis zu einem Punkt längs der Breite des Ringes (25) erstreckt und eine Asymmetrie erzeugt, die dazu neigt, daß der Ring (25) dazu gebracht wird, sich auf die Rollen (23) zuzurollen, wodurch der Ring (25) sowohl in radialer als auch in axialer Richtung der Nut (26) starr festgelegt wird;
- Einsetzen der Rollen (23) zwischen die aufeinander zuweisenden, zylindrischen Laufbahnen (21, 22) des inneren und äußeren Laufringes (11, 13) unter Verwendung geeigneter Mittel;
- Ausdehnen des seitlichen, schulterbildenden Ringes (25) durch eine Erwärmung und Einsetzen des Ringes in die ringförmige Gehäusenut (26);
- Abkühlen des seitlichen, schulterbildenden Ringes (25), der auf diese Weise schrumpft.

2. Vollständig oder teilweise gefülltes Rollenlager sehr kleiner, axialer Abmessung und hoher Belastungskapazität, das nach dem Verfahren gemäß Anspruch 1 hergestellt ist und das einen Innenlaufring (11) und einen Außenlaufring (13) umfaßt, die mit aufeinander zuweisenden, zylindrischen Führungen und mit Rollenlaufbahnen (21, 22) für Rollen (23) versehen sind, wobei in wenigstens einer der Kanten der zylindrischen Führung und der Rollenlaufbahn (21) für die Rollen (23) im Inneren Lagerlaufring (11) eine ringförmige Gehäusenut (26) mit einer ebenen Basis (27) vorgesehen ist, die zur Laufbahn (21) senkrecht steht, wobei die Nut mit dem seitlichen, schulterbildenden Ring (25) für die Rollen (23) zusammenarbeitet, der seinerseits eine geringe Dicke und einen inneren Durchmesser hat, der geringfügig kleiner ist als der der Öffnung der ringförmigen Gehäusenut (26), in die der Ring (25) eingesetzt wird, nachdem er durch eine Erwärmung ausgedehnt worden ist, wobei die ringförmige Gehäusenut (26) eine kegelstumpfförmige Wand (28) hat, die in Richtung auf das Innere des Innenlaufringes (11) abgeschrägt ist, und wobei der seitliche, schulterbildende Ring (25) an seiner Innenkante (29) eine Kegelstumpfform aufweist, die der der kegelstumpfförmigen Wand (28) der ringförmigen Nut (26) entspricht, gegen die er sich durch die auf die Abkühlung folgende Schrumpfung eng anlegt, wobei an der Außenseite des seitlichen, schulterbildenden Ringes (25) eine Abschrägung (30) vorgesehen ist, die vom Außenumfang bis zu einem Punkt längs der Breite dieses Ringes (25) verläuft und eine Asymmetrie erzeugt, die dazu neigt, den Ring (25) dazu zu bringen, sich auf die Rollen (23) zuzurollen und dabei den Ring (25) sowohl in radialer als auch in axialer Richtung in der Nut (26) starr festzulegen.

3. Rollenlager nach Anspruch 2,
dadurch **gekennzeichnet**, daß die Abschrägung sowohl der kegelstumpfförmigen Wand (28) der ringförmigen Gehäusenut (26) als auch der inneren, kegelstumpfförmigen Kante (29) des seitlichen, schulterbildenden Ringes (25) eine Neigung hat, die den Reibungswinkel übersteigt.

4. Rollenlager nach einem der Ansprüche 2 oder 3,
dadurch **gekennzeichnet**, daß die Abschrägung (30) vom Außenumfang bis etwa zur Mitte der Breite des Ringes (25) verläuft.

## Revendications

1. Procédé de fabrication d'un palier avec de préférence un remplissage complet de la piste de rouleaux, de très faible dimension axiale et à forte capacité de charge, comprenant une bague intérieure (11) et une bague extérieure (13) dotées de chemins (21, 22) de roulement et de guidage des rouleaux (23), cylindriques et en vis-à-vis, ledit procédé comprenant les étapes de :
- formation dans l'un au moins des bords dudit chemin cylindrique de roulement et de guidage (21) de ladite bague intérieure (11) du palier d'une rainure annulaire de logement (26) avec une paroi tronconique (28) évasée vers l'intérieur de la bague de roulement (11) et avec une base plate (27) perpendiculaire audit chemin (21),
- formation d'au moins une bague (25) de formation d'épaulement latéral, de faible épaisseur, dont le bord intérieur (29) a une forme tronconique qui correspond à celle de ladite paroi tronconique (28) de la rainure annulaire (26) et dont le diamètre intérieur minimal est légèrement plus petit que celui de l'entrée de ladite rainure annulaire de logement (26), avec un biseau (30) en sa face extérieure qui va de la périphérie extérieure jusqu'à un point situé sur la largeur de la bague (25) et qui crée une dissymétrie tendant à faire rouler la bague (25) vers les rouleaux (23), ce qui bloque rigidement la bague (25) dans la rainure (26) aussi bien dans la direction axiale que dans la direction radiale,
- insertion des rouleaux (23) entre lesdits chemins (21, 22), cylindriques et en vis-à-vis, desdites bagues intérieure et extérieure 11, 13) du palier à l'aide de moyens appropriés,
- dilatation de ladite bague (25) de formation d'épaulement latéral par chauffage et insertion de celle-ci dans la rainure annulaire de logement (26),
- refroidissement, et donc rétrécissement, de ladite bague (25) de formation d'épaulement latéral.

2. Palier à remplissage complet ou partiel de la piste de rouleaux, de très faible dimension axiale et à forte capacité de charge, fabriqué suivant le procédé de la revendication 1, comprenant une bague intérieure (11) et une bague extérieure (13) dotées de chemins (21, 22) de roulement et de guidage des rouleaux (23), cylindriques et en vis-à-vis, et, dans l'un au moins des bords dudit chemin cylindrique de roulement et de guidage (21) des rouleaux (23) de ladite bague intérieure (11) du palier, une rainure annulaire de logement (26) avec une base plate (27) perpendiculaire audit chemin (21), destinée à coopérer avec la bague (25) de formation d'épaulement latéral pour lesdits rouleaux (23) qui a une faible épaisseur et un diamètre intérieur légèrement plus petit que celui de l'entrée de ladite rainure annulaire de logement (26) dans laquelle ladite bague (25) est insérée après avoir été dilatée par chauffage, si bien que ladite rainure annulaire de logement (26) a une paroi tronconique (28) évasée vers l'intérieur de la bague de roulement (11) et ladite bague (25) de formation d'épaulement latéral a son bord intérieur (29) de forme tronconique qui correspond à celle de ladite paroi tronconique (28) de ladite rainure annulaire (26) contre laquelle elle est serrée par le rétrécissement qui suit le refroidissement, et sur la face extérieure de ladite bague (25) de formation d'épaulement latéral, est formé un biseau (30) qui va de la périphérie extérieure jusqu'à un point situé sur la largeur de la bague (25) et qui crée une dissymétrie tendant à faire rouler la bague (25) vers les rouleaux (23), ce qui bloque rigidement la bague (25) dans la rainure (26) aussi bien dans la direction axiale que dans la direction radiale.

3. Palier selon la revendication 2, caractérisé en ce que ledit évasement de la paroi tronconique (28) de ladite rainure annulaire de logement (26) et du bord tronconique intérieur (29) de ladite bague (25) de formation d'épaulement latéral a une inclinaison supérieure à l'angle de frottement.

4. Palier selon la revendication 2 ou 3, caractérisé en ce que ledit biseau (30) s'étend depuis la périphérie extérieure sur environ la moitié de la largeur de la bague (25).
